# EUROPÄISCHE PATENTSCHRIFT

(11) **EP 2 165 352 B1**
(45) Veröffentlichungstag und Bekanntmachung des Hinweises auf die Patenterteilung: **21.11.2012**
(21) Anmeldenummer: 08786001.1
(22) Anmeldetag: 09.07.2008
(51) Int. Cl.: H01J 61/44, C09K 11/59, C09K 11/02

(54) **ENTLADUNGSLAMPE UND LEUCHTSTOFFVERBINDUNG FÜR EINE ENTLADUNGSLAMPE**
DISCHARGE LAMP AND ILLUMINANT COMPOUND FOR A DISCHARGE LAMP
LAMPE À DÉCHARGE ET COMPOSÉ LUMINESCENT POUR LAMPE À DÉCHARGE

(30) Priorität: 16.07.2007 DE 102007033028
(43) Veröffentlichungstag der Anmeldung: 24.03.2010
(73) Patentinhaber: OSRAM AG, 81543 München (DE)
(72) Erfinder: JERMANN, Frank, 86343 Königsbrunn (DE); KONRAD, Armin, 86845 Grossaitingen (DE); ZACHAU, Martin, 82269 Geltendorf (DE)
(86) Internationale Anmeldenummer: PCT/EP2008/058894
(87) Internationale Veröffentlichungsnummer: WO 2009/010430

(56) Entgegenhaltungen:
- EP-A- 1 428 863
- WO-A-2007/054875
- WO-A1-2006/095284
- US-A1- 2004 095 058

## Beschreibung

### Technisches Gebiet

Die Erfindung betrifft eine Leuchtstoffverbindung für eine Entladungslampe sowie eine Entladungslampe, insbesondere eine Hg-Niederdruckentladungslampe.

### Stand der Technik

Für thermisch relativ gering belastete Entladungslampen mit einem Entladungsstrom kleiner 200 mA, werden zur Erhöhung der Farbsättigung an der Außenseite des Entladungsgefäßes der Entladungslampe Folien als Farbfilterangebracht. Zur Farbsättigung einer grünen Fluoreszenzlampe wird dazu eine grüne Folie angebracht. Für thermisch niedrig belastete Entladungslampen mit einem Entladungsstrom kleiner 200 mA können pigmentierte oder mit einem Farbstoff versehene Folien beispielsweise aus PET, PC oder VPA eingesetzt werden.

Für thermisch relativ hoch belastete Entladungslampen mit zum Beispiel einem Entladungsstrom größer 300 mA kann ein entsprechend pigmentierter Silikonkautschuk verwendet werden. Ein Nachteil an diesen Löschungen ist darin zu sehen, dass durch die zusätzliche Beschichtung an der Außenseite eine im Vergleich zu einer Anbringung an der Innenseite der Entladungslampe teurere Ausführung entsteht. Zudem ergibt sich durch die Filterwirkung des farbigen Schlauchmaterials eine relativ geringe Lichtausbeute.

Die WO 2007/054875 A1 offenbart eine Entladungslampe, welche ein Entladungsgefäß mit einer Leuchtstoffschicht aufweist. Die Leuchtstoffschicht umfasst ein Gemisch aus rot und grün lumineszierenden Materialien. Das rot lumineszierende Material umfasst (Y,Gd)₂O₃:Eu, das grün luminszierende Material umfasst (Ba,Ca,Sr)₂SiO₄:Eu und/oder (Sr,Ca,Ba,Mg,Zn)Si₂N₂O₂:Eu. Partikel des grün lumineszierenden Materials sind mit Al₂O₃ ummantelt.

### Darstellung der Erfindung

Es ist Aufgabe der vorliegenden Erfindung, eine Leuchtstoffverbindung sowie eine Entladungslampe zu schaffen, welche kostenreduziert hergestellt werden kann und darüber hinaus eine relativ hohe Lichtausbeute ermöglicht.

Diese Aufgabe wird durch eine Leuchtstoffverbindung, welche die Merkmale nach Anspruch 1 aufweist, und eine Entladungslampe, welche die Merkmale nach Anspruch 7 aufweist, gelöst.

Eine erfindungsgemäße Leuchtstoffverbindung für eine Entladungslampe weist ein Emissionsspektrum im grünen Spektralbereich auf und ist zur Absorption einer von einer Hg (Quecksilber)-Quelle im sichtbaren Spektralbereich emittierten Strahlung und zur Konversion dieser sichtbaren Strahlung der Hg-Quelle in das Emissionsspektrum der Leuchtstoffverbindung ausgebildet. Die Leuchtstoffverbindung weist als Bestandteil ein mit EU (Europium) dotiertes Orthosilikat auf, welches aus der Formel (Ba, Sr, Ca)₂SiO₄:Eu gebildet ist. Weiterhin kann auch vorgesehen sein, dass die Leuchtstoffverbindung als Bestandteil mit EU dotiertes (Sr_{1-x-y}BaₓCa_{y})Si₂O₂N₂:Eu, welches im folgenden kurz als SrSiON:Eu bezeichnet ist, aufweist. Gerade durch diese beiden vorteilhaften unterschiedlichen Bestandteile der Leuchtstoffverbindung kann jeweils die Erhöhung der Farbsättigung einer grünen Entladungslampe bei einer höheren Lichtausbeute erreicht werden. Darüber hinaus kann die Herstellung von kompakteren Lampentypen mit gleicher Emission im Vergleich zu Entladungslampen aus dem Stand der Technik erreicht werden. Insbesondere Kompaktleuchtstofflampen ohne einen Hüllkolben können dadurch verbessert ausgebildet und hergestellt werden.

Durch diese Leuchtstoffverbindung kann auch die Effizienz von grünes Licht emittierenden Entladungslampen verbessert werden.

Die Leuchtstoffverbindung ist mit einer Schutzschicht umgeben, so dass die Leuchtstoffkörner bzw. Leuchtstoffverbindung in der Schutzschicht eingebettet ist. Die Materialkomponenten der Schutzschicht sind unterschiedlich zu denen der Leuchtstoffverbindung. Erfindungsgemäß umfasst die Schutzschicht Aluminiumborate oder Aluminiumphosphate.

Kriterien für die Eignung von Leuchtstoffen für die Anwendung in Leuchtstoff- und Kompaktleuchtstofflampen sind darin zu sehen, dass die Stabilität gegenüber der anregenden Strahlung gegeben ist und eine geringe Affinität gegenüber Hg und damit eine geringe Absorption von Hg während des Lampenbetriebs vorherrscht. Ein weiteres Kriterium kann in der Stabilität in Wasser gesehen werden, damit die heute üblichen, umweltfreundlichen Beschichtungsverfahren, bei denen Wasser-basierte Suspension eingesetzt wird, verwendet werden kann.

Die genannten Kriterien können durch die genannte Schutzschicht, welche die Leuchtstoffverbindung umgibt, erfüllt werden. Vorzugsweise wird bei diesem Coating eine möglichst dichte und dünne Schutzschicht um die einzelnen Leuchtstoffkörner gebildet. Diese Schutzschicht unterscheidet sich in ihrer Zusammensetzung von der Zusammensetzung im Inneren des Leuchtstoffkorns bzw. von der mittleren Zusammensetzung. Die Zusammensetzung der Oberfläche lässt sich zum Beispiel mit Oberflächen-sensitiven Methoden wie XPS oder SNMS bestimmen, die mittlere Zusammensetzung des Leuchtstoffs mit Volumen-sensitiven Methoden wie beispielsweise EDX, RFA oder einer chemischen Analyse ermitteln.

Vorzugsweise werden derartige gecoatete und somit mit einer Schutzschicht umgebene Leuchtstoffverbindungen in einer Leuchtstoffschicht einer Entladungslampe verwendet. Vorzugsweise ist die Leuchtstoffverbindung Tb (Terbium)-frei und Mn (Mangan)-frei ausgebildet. Dadurch kann auch eine kostenreduzierte Leuchtstoffverbindung hergestellt werden, welche zur besseren Effizienz der Entladungslampe beiträgt.

Die erfindungsgemäße Leuchtstoffverbindung weist somit ein Emissionsverhalten auf, bei dem ein geeignetes Spektrum mit dem passenden Farbort emittierbar ist, und zudem die sichtbare Hg-Vis-Strahlung einer Hg-Quelle nicht nur absorbiert, sondern in das Emissionsspektrum der Leuchtstoffverbindung konvertierbar ist. Durch Absorption und Konversion dieser sichtbaren Hg-Strahlung wird gegenüber den aus dem Stand der Technik bekannten Lösungen mit absorbierenden Farbfiltern eine höhere Farbsättigung bei gleichzeitig höherer Effizienz der Entladungslampe erreicht. Die Notwendigkeit für einen Farbfilter entfällt dann. Vorzugsweise ist die Leuchtstoffverbindung so ausgebildet, dass sie für Strahlung mit einer Wellenlänge von etwa 254 nm eine sehr starke Absorption aufweist. Strahlung mit einer derartigen Wellenlänge wird als Hauptintensität bei der Quecksilber-Niederdruckentladung in einer Hg-Niederdruckentladungslampe abgestrahlt. Eine sehr starke Absorption ist dadurch gekennzeichnet, dass die Reflexion einer gepressten Pulvertablette in 45°/0°-Geometrie gemessen relativ zu einem Al₂O₃-Standard kleiner 40 % beträgt.

Die Leuchtstoffverbindung ist des Weiteren vorzugsweise so ausgebildet, dass sie für Strahlung mit einer Wellenlänge kleiner 440 nm eine starke Absorption aufweist. Dabei bedeutet eine starke Absorption, dass die Reflexion einer gepressten Pulvertablette in 45°/0°-Geometrie gemessen relativ zu einem Al₂O₃-Standard weniger 60 % beträgt.

Vorzugsweise ist die Leuchtstoffverbindung so ausgebildet, dass sie für Strahlung mit einer Wellenlänger größer 530 nm eine schwache Absorption aufweist. Eine schwache Absorption bedeutet, dass die Reflexion einer gepressten Pulvertablette in 45°/0°-Geometrie gemessen relativ zu einem Al₂O₃-Standard mehr als 90 % beträgt.

Vorzugsweise weist das Emissionsspektrum der Leuchtstoffverbindung eine dominierende Wellenlänge zwischen 500 nm und 565 nm auf. Insbesondere weist die Leuchtstoffverbindung eine dominierende Wellenlänge im Bereich von 555 nm auf. Dadurch können insbesondere grünes Licht emittierende Entladungslampen mit einer dominierenden Emissionswellenlänge im Bereich von 555 nm bereitgestellt werden, welche mit einer Farbsättigung größer als 80 % ausgebildet werden können. Dies ist eine wesentliche Erhöhung der Farbsättigung, da aus dem Stand der Technik bekannte Lampen mit einem Emissionsspektrum im genannten Wellenlängenbereich lediglich eine Farbsättigung bis maximal 60 % erreichen. Darüber hinaus kann bei einer Lampe mit einer derartigen Leuchtstoffverbindung eine höhere Lichtausbeute ermöglicht werden.

Vorzugsweise ist die Halbwertsbreite der Emissionsbande der erfindungsgemäßen Leuchtstoffverbindung kleiner 100 nm.

Der Gewichtsanteil der Dotierung mit Eu ist vorzugsweise zwischen 0,1 % und 15 % insbesondere zwischen 0,2 % und 2 %. Insbesondere beträgt der Gewichtsanteil der Dotierung mit Eu zwischen 1 % und 2 %. Besonders bevorzugt ist dieser spezifische Gewichtsanteil bei einer Leuchtstoffverbindung, welche SrSiON:Eu aufweist.

Die Leuchtstoffverbindung umfasst somit keinen Tbhaltigen Bestandteil, wie beispielsweise LAP, CAT oder CBT, wie dies im Stand der Technik der Fall ist, sondern insbesondere SrSiON:Eu oder das Orthosilikat der Formel (Ba, Sr, Ca)₂SiO₄:Eu. Diese Bestandteile der grün emittierenden Leuchtstoffverbindung gemäß der Erfindung werden auch anstelle von aus dem Stand der Technik bekannten Mn-haltigen Verbindungen wie beispielsweise ZnS:Mn oder BAM:EU, Mn eingesetzt.

Es kann vorgesehen sein, dass die erfindungsgemäße Leuchtstoffverbindung und/oder zumindest eine der vorteilhaften Ausführungen ausschließlich aus den jeweils genannten Zusammensetzungen besteht und somit keine weiteren chemischen Bestandteile umfasst. Es kann jedoch auch vorgesehen sein, dass dies keine abschließende Komponentenangabe ist, sondern dass die erfindungsgemäße Leuchtstoffverbindung und/oder eine vorteilhafte Ausführung davon darüber hinaus auch weitere chemische Bestandteile, insbesondere weitere Leuchtstoffe, umfassen kann.

Es soll explizit erwähnt werden, dass alle für die Leuchtstoffverbindung angegebenen chemischen Formeln der Bestandteile als Idealformeln bezeichnet sind, dass jedoch auch alle über dies Idealformeln hinausgehenden Verbindungen mit (geringfügigen) Abweichungen in der Stöchiometrie explizit von der Erfindung mit umfasst sind. Dies gilt im Besonderen für Abweichungen bei denen die Kristallstruktur gleich bleibt und die Abweichungen in Emissions- und Absorptionsspektren sich in der Peaklage um weniger als 1%, und in der Peakbreite um weniger als 5% unterscheiden.

Idealformeln für einige weitere Leuchtstoffe bzw. Bestandteile der Leuchtstoffverbindung seien durch nachfolgende Angabe angefügt:
CAT bezeichnet (Ce,Tb)MgA111O19; LAP bezeichnet (La,Ce,Tb)PO4; BAM bezeichnet (Ba,Eu)MgA110O17; BAMMn bezeichnet (Ba,Eu)(Mg,Mn)A110O17; CBT bezeichnet (Gd,Ce,Tb)(Mg,Zn,Mn)B5O10; SCAP bezeichnet (Sr,Ba,Ca,Mg,Eu)5(PO4)3(F,Cl); SCAPMn bezeichnet (Sr,Ba,Ca,Mg,Eu,Mn)5(PO4)3(F,Cl); Zinksilikat bezeichnet (Zn,Mg,Mn)2SiO4; YOE bezeichnet Y2O3:Eu.

Des Weiteren betrifft die Erfindung eine Entladungslampe mit einem Entladungsgefäß, an dessen Innenseite eine Leuchtstoffschicht ausgebildet ist. Die Leuchtstoffschicht weist eine erfindungsgemäße Leuchtstoffverbindung oder eine vorteilhafte Ausgestaltung davon auf. Indem ein erfindungsgemäßer Leuchtstoff im Inneren der Entladungslampe verwendet wird, kann eine im Vergleich zum Stand der Technik kostengünstigere Realisierung ermöglicht werden, wobei zusätzlich die Effizienz der grünes Licht emittierenden Entladungslampe verbessert werden kann. Darüber hinaus kann die Lichtausbeute erhöht werden. Vorzugsweise ist die Leuchtstoffschicht unmittelbar an der Innenseite des Entladungsgefäßes ausgebildet.

Die Entladungslampe ist insbesondere als Hg-Niederdruckentladungslampe ausgebildet.

Potentielle Anwendungen von derartigen Entladungslampen sind beispielsweise in lichtgebenden und im Verkehr eingesetzten Komponenten zur Erzeugung von Verkehrssignalen möglich. Des Weiteren können derartige Entladungslampen für die Anzeige von Notausgängen Verwendung finden. Auch bei Campingleuchten oder Effektbeleuchtungen kann eine entsprechende Verwendung vorgesehen sein.

Es kann vorgesehen sein, dass die erfindungsgemäße Leuchtstoffverbindung und/oder zumindest eine der vorteilhaften Ausführungen ausschließlich aus den jeweils genannten Zusammensetzungen besteht und somit keine weiteren chemischen Bestandteile umfasst. Es kann jedoch auch vorgesehen sein, dass dies keine abschließende Komponentenangabe ist, sondern dass die erfindungsgemäße Leuchtstoffverbindung und/oder eine vorteilhafte Ausführung davon darüber hinaus auch weitere chemische Bestandteile, insbesondere weitere Leuchtstoffe, umfassen kann.

### Kurze Beschreibung der Zeichnungen

Ein Ausführungsbeispiel der Erfindung wird nachfolgend anhand schematischer Zeichnungen näher erläutert. Es zeigen:
- Fig. 1: eine schematische Schnittdarstellung einer erfindungsgemäßen Entladungslampe;
- Fig. 2: ein Diagramm, in dem ein Emissionsspektrum eines aus dem Stand der Technik bekannten Leuchtstoffs sowie einer Ausführung einer Leuchtstoffverbindung dargestellt sind; und
- Fig. 3: eine Tabelle, in der lichttechnische Eigenschaften eines Leuchtstoffs aus dem Stand der Technik sowie Eigenschaften von Ausführungen einer Leuchtstoffverbindung angegeben sind.

### Bevorzugte Ausführung der Erfindung

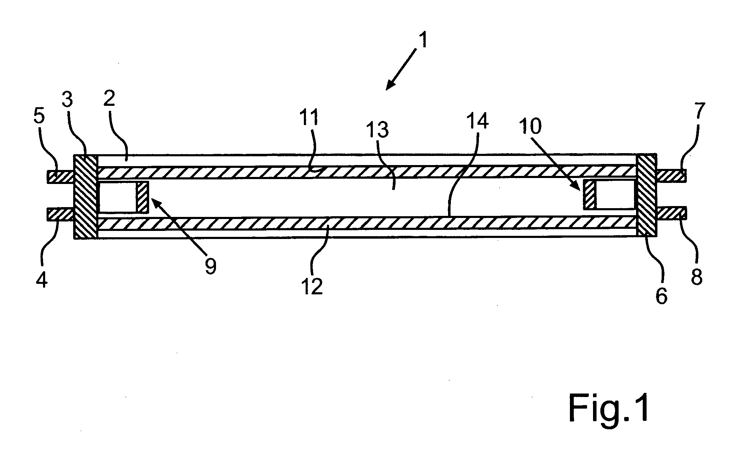

In Fig. 1 ist in einer schematischen Schnittdarstellung eine Entladungslampe 1 gezeigt, welche als Hg-Niederdruckentladungslampe konzipiert ist. Die Entladungslampe 1 ist stabförmig ausgebildet und umfasst ein rohrförmiges Entladungsgefäß 2, welches ein Glaskolben ist. An einem Ende des Entladungsgefäßes 2 ist ein Sockel 3 angebracht, welcher sich nach außen erstreckende elektrische Kontaktierungen 4 und 5 aufweist. An der gegenüberliegenden Seite des Entladungsgefäßes 2 ist ebenfalls ein Sockel 6 angeordnet, an dem sich nach außen erstreckende elektrische Kontaktierungen 7 und 8 befestigt sind. Diese elektrischen Kontaktierungen 7 und 8 sind über Stromzuführungen mit einer Elektrode 10, welche sich in den Entladungsraum 13 des Entladungsgefäßes 2 erstreckt, elektrisch verbunden. In entsprechender Weise sind die elektrischen Kontaktierungen 4 und 5 mit Stromzuführungen verbunden, welche mit einer weiteren Elektrode 9 verbunden sind, wobei sich auch diese Elektrode 9 im Entladungsraum 13 des Entladungsgefäßes 2 erstreckt.

An einer Innenseite 11 des Entladungsgefäßes 2 ist eine Leuchtstoffschicht 12 ausgebildet, welche sich im Ausführungsbeispiel über die gesamte Länge des Entladungsgefäßes 2 erstreckt. Die Leuchtstoffschicht 12 ist im Ausführungsbeispiel unmittelbar an der Innenseite 11 ausgebildet. In der gezeigten Ausführung ist lediglich die Leuchtstoffschicht 12 dargestellt, wobei vorgesehen sein kann, dass auch auf der dem Entladungsraum 13 zugewandten Oberseite 14 und somit der der Innenseite 11 des Entladungsgefäßes 2 abgewandten Oberseite 14 eine weitere Schicht ausgebildet ist. Diese kann beispielsweise eine Schutzschicht für die Leuchtstoffverbindungen der Leuchtstoffschicht 12 sein. Ebenso kann auf dieser Oberseite 14 eine weitere Leuchtstoffschicht unmittelbar oder mittelbar ausgebildet sein. Ebenso kann vorgesehen sein, dass zwischen der Leuchtstoffschicht 12 und der Innenseite 11 eine weitere Schicht angeordnet und ausgebildet ist.

Die Leuchtstoffschicht 12 umfasst eine Vielzahl von Leuchtstoffkörnern bzw. Leuchtstoffverbindungen, wobei eine Leuchtstoffverbindung ein Emissionsspektrum im grünen Spektralbereich aufweist und zur Absorption einer von einer Hg-Quelle im sichtbaren Spektralbereich emittierten Strahlung und zur Konversion dieser sichtbaren Strahlung der Hg-Quelle in das Emissionsspektrum der Leuchtstoffverbindung ausgebildet ist.

Mit einer Hg-Quelle wird ein Quecksilberatom oder ein Quecksilberion verstanden, welches während der Niederdruckentladung im Entladungsraum 13 durch die von einer Elektrode 9 oder 10 emittierten Elektronen angeregt werden und die genannte Strahlung emittieren.

Die Leuchtstoffverbindungen in der Leuchtstoffschicht 12 emittieren ein geeignetes Spektrum mit dem passenden Farbort.

Vorzugsweise ist eine Leuchtstoffverbindung so ausgebildet, dass sie bei einer Wellenlänge von 254 nm, bei der die Hauptintensität der Hg-Niederdruckentladung abgestrahlt wird, sehr stark absorbiert, bei Wellenlängen kleiner 440 nm stark absorbiert und im Wellenlängenbereich größer 530 nm schwach absorbiert. Darüber hinaus ist die Leuchtstoffverbindung so ausgebildet, dass eine grüne Emission mit einer Dominanzwellenlänge zwischen 500 nm und 565 nm gegeben ist.

Insbesondere ist die Entladungslampe 1 mit der mit den Leuchtstoffverbindungen konzipierten Leuchtstoffschicht 12 so ausgebildet, dass eine dominierende Wellenlänge im Bereich von 555 nm auftritt.

Im Ausführungsbeispiel ist vorgesehen, dass eine Leuchtstoffverbindung der Leuchtstoffschicht 12 mit Europium dotiert ist. Insbesondere dann, wenn die Leuchtstoffverbindung SrSiON:Eu ist, beträgt die Dotierung mit Europium zwischen 1 % und 2 %.

Es kann auch vorgesehen sein, dass die Leuchtstoffverbindung ein mit Europium dotiertes Orthosilikat der allgemeinen Formel (Ba, Sr, Ca)₂SiO₄:Eu ist.

Die Leuchtstoffverbindungen sind mit einer Schutzschicht aus einem ternären Material umgeben.

Durch die Leuchtstoffverbindung wird Licht mit der Lichtfarbe 66 emittiert.

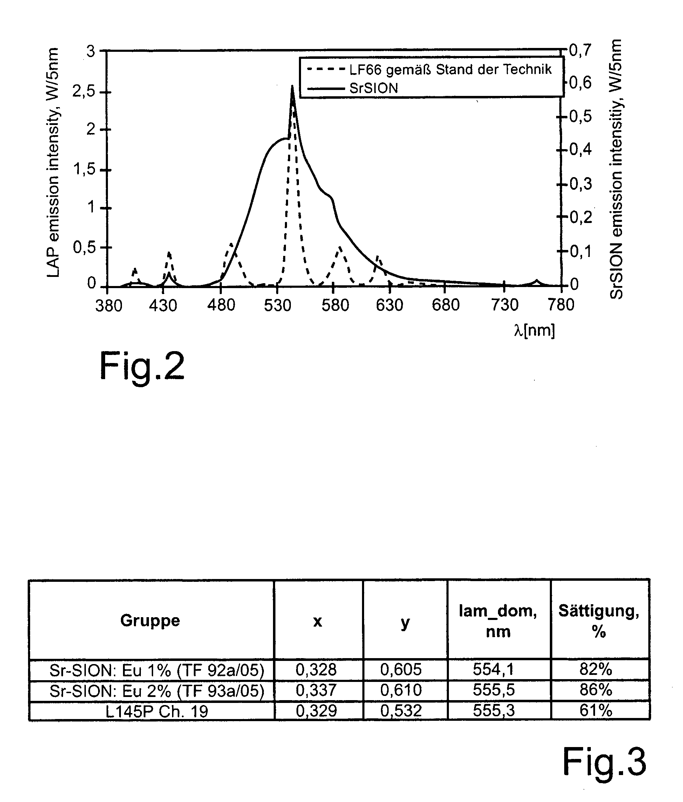

In Fig. 2 ist ein Diagramm gezeigt, bei dem das Emissionsspektrum eines aus dem Stand der Technik bekannten Leuchtstoffs (Lichtfarbe 66) gemäß der gestrichelten Linie und ein den Bestandteil SrSiON:Eu umfassender Bestandteil eines Leuchtstoffs bzw. einer Leuchtstoffverbindung gezeigt. Der aus dem Stand der Technik bekannte und durch die gestrichelte Linie dargestellte Verlauf des bekannten Leuchtstoffs betrifft den Leuchtstoff LAP. Deutlich ist die Unterschiedlichkeit zwischen den Spektren zu erkennen, wodurch sich daraus auch die verbesserten Eigenschaften einer erfindungsgemäßen Leuchtstoffverbindung erkennen lassen.

In Fig. 3 ist eine Tabelle gezeigt, in der in den ersten beiden Zeilen Ausführungsbeispiele von Leuchtstoffverbindungen mit ihren Chromazitäten bzw. Normfarbwertanteilen x und y angegeben sind. Darüber hinaus ist auch noch die dominierende Wellenlänge lam_dom sowie die Farbsättigung in Prozent angegeben. In der letzten Zeile ist im Vergleich dazu die Angabe der entsprechenden Werte und Parameter für den aus dem Stand der Technik bekannten Leuchtstoff LAP gezeigt. Es ist zu erkennen, dass bei im Wesentlichen gleichen Normfarbwertanteilen eine deutlich höhere Farbsättigung mit den Ausführungen der Leuchtstoffverbindung gegenüber dem aus dem Stand der Technik bekannten Leuchtstoff erzielt werden kann.

## Patentansprüche

1. Leuchtstoffverbindung für eine Entladungslampe (1), die ein Emissionsspektrum im grünen Spektralbereich aufweist und zur Absorption einer von einer Hg-Quelle im sichtbaren Spektralbereich emittierten Strahlung und zur Konversion dieser sichtbaren Strahlung der Hg-Quelle in das Emissionsspektrum der Leuchtstoffverbindung ausgebildet ist, wobei die Leuchtstoffverbindung als Bestandteil ein mit Europium dotiertes Orthosilikat der Formel (Ba, Sr, Ca)₂SiO₄:Eu oder (Sr_{1-x-y}BaₓCa_{y}) Si₂O₂N₂:Eu aufweist, und wobei die Leuchtstoffverbindung in einer Schutzschicht eingebettet ist,
**dadurch gekennzeichnet, dass**
die Schutzschicht Aluminiumborate oder Aluminiumphosphate umfasst.

2. Leuchtstoffverbindung nach Anspruch 1,
**dadurch gekennzeichnet, dass**
sie für Strahlung mit Wellenlängen kleiner 440 nm eine starke Absorption und insbesondere für Strahlung mit einer Wellenlänge von etwa 254 nm eine sehr starke Absorption aufweist.

3. Leuchtstoffverbindung nach einem der vorhergehenden Ansprüche,
**dadurch gekennzeichnet, dass**
sie für Strahlung mit einer Wellenlänge größer 530 nm eine schwache Absorption aufweist.

4. Leuchtstoffverbindung nach einem der vorhergehenden Ansprüche,
**dadurch gekennzeichnet, dass**
das Emissionsspektrum eine dominierende Wellenlänge zwischen 500 nm und 565 nm, insbesondere 555 nm, aufweist.

5. Leuchtstoffverbindung nach einem der vorhergehenden Ansprüche,
**dadurch gekennzeichnet, dass**
die Halbwertsbreite der Emissionsbande kleiner 100 nm ist.

6. Leuchtstoffverbindung nach einem der vorhergehenden Ansprüche,
**dadurch gekennzeichnet, dass**
der Gewichtsanteil der Dotierung mit Eu insbesondere zwischen 0,1 % und 15 % und besonders bevorzugt zwischen 1 % und 2 % beträgt.

7. Entladungslampe mit einem Entladungsgefäß (2) an dessen Innenseite (11) eine Leuchtstoffschicht (12) ausgebildet ist,
**dadurch gekennzeichnet, dass**
die Leuchtstoffschicht (12) eine Leuchtstoffverbindung nach einem der vorhergehenden Ansprüche aufweist.

8. Entladungslampe nach Anspruch 7,
**dadurch gekennzeichnet, dass**
die Leuchtstoffschicht (12) unmittelbar an der Innenseite (11) des Entladungsgefäßes (2) ausgebildet ist.

9. Entladungslampe nach Anspruch 7 oder 8, welche als Hg-Niederdruckentladungslampe ausgebildet ist.

## Claims

1. Phosphor compound for a discharge lamp (1), which has an emission spectrum in the green spectral region and is designed to absorb a radiation emitted by an Hg source in the visible spectral region and to convert this visible radiation from the Hg source into the emission spectrum of Phosphor compound, wherein the Phosphor compound comprises, as a constituent, a europium-doped orthosilicate of the formula (Ba, Sr, Ca)₂SiO₄:Eu or (Sr_{1-x-y}BaₓCa_{y}) Si₂O₂N₂:Eu, and wherein the phosphor compound is embedded in a protective coating, **characterized in that** the protective coating comprises aluminum borates or aluminum phosphates.

2. Phosphor compound according to Claim 1, **characterized in that** it has a high level of absorption for radiation with wavelengths of less than 440 nm and in particular a very high level of absorption for radiation with a wavelength of approximately 254 nm.

3. Phosphor compound according to one of the preceding claims, **characterized in that** it has a low level of absorption for radiation with a wavelength of greater than 530 nm.

4. Phosphor compound according to one of the preceding claims, **characterized in that** the emission spectrum has a dominant wavelength of between 500 nm and 565 nm, in particular 555 nm.

5. Phosphor compound according to one of the preceding claims, **characterized in that** the full width at half maximum of the emission bands is less than 100 nm.

6. Phosphor compound according to one of the preceding claims, **characterized in that** the weight fraction of the Eu doping is in particular between 0.1% and 15% and particularly preferably between 1% and 2%.

7. Discharge lamp with a discharge vessel (2), with a phosphor coating (12) being formed on the inner side (11) of said discharge vessel, **characterized in that** Phosphor coating (12) comprises a phosphor compound according to one of the preceding claims.

8. Discharge lamp according to Claim 7, **characterized in that** Phosphor coating (12) is formed directly on the inner side (11) of the discharge vessel (2).

9. Discharge lamp according to Claim 7 or 8 which is in the form of an Hg low-pressure discharge lamp.

## Revendications

1. Composé luminescent pour une lampe à décharge (1), laquelle présente un spectre d'émission dans le domaine spectral du vert et laquelle est conçue pour absorber un rayonnement émis par une source de mercure dans le domaine spectral visible et pour convertir ce rayonnement visible de la source de mercure en le spectre d'émission du composé luminescent, le composé luminescent comportant comme constituant un orthosilicate dopé à l'europium de formule (Ba, Sr, Ca)2SiO₄:Eu ou (Sr_{1-xy}BaₓCa_{y})Si₂O₂N₂:Eu, et le composé luminescent étant noyé dans une couche protectrice,
**caractérisé en ce que**
la couche protectrice comprend des borates d'aluminium ou des phosphates d'aluminium.

2. Compose luminescent selon la revendication 1,
**caractérisé en ce que**
il présente une forte absorption pour un rayonnement de longueurs d'ondes inférieures à 440 nm et en particulier une très forte absorption pour un rayonnement de longueur d'onde d'environ 254 nm.

3. Composé luminescent selon l'une des revendications précédentes,
**caractérisé en ce que**
il présente une faible absorption pour un rayonnement de longueur d'onde supérieure à 530 nm.

4. Composé luminescent selon l'une des revendications précédentes,
**caractérisé en ce que**
le spectre d'émission a une longueur d'onde dominante comprise entre 500 nm et 565 nm, en particulier de 555 nm.

5. Composé luminescent selon l'une des revendications précédentes,
**caractérisé en ce que**
la largeur de valeur moyenne de la bande d'émission est inférieure à 100 nm.

6. Composé luminescent selon l'une des revendications précédentes,
**caractérisé en ce que**
le pourcentage pondéral du dopage à l'europium est typiquement compris entre 0,1 % et 15 % et de manière particulièrement préférée entre 1 % et 2 %.

7. Lampe à décharge comprenant une enceinte de décharge (2) sur la face interne (11) de laquelle est formée une couche luminescente (12),
**caractérisée en ce que**
la couche luminescente (12) comporte un composé luminescent selon l'une des revendications précédentes.

8. Lampe à décharge selon la revendication 7,
**caractérisée en ce que**
la couche luminescente (12) est formée directement sur la face interne (11) de l'enceinte de décharge (2).

9. Lampe à décharge selon la revendication 7 ou 8, laquelle est conçue comme lampe à décharge basse pression de mercure.
